# EUROPEAN PATENT APPLICATION

(11) **EP 1 324 582 A1**
(43) Date of publication of application: **02.07.2003**
(21) Application number: 02102759.4
(22) Date of filing: 16.12.2002
(51) Int. Cl.: H04M 3/56, H04B 3/21

(54) **Teleconferencing Bridge with comb filtering for spatial sound image**

(30) Priority: 20.12.2001 FI 20012539
(71) Applicant: Nokia Corporation, 02150 Espoo (FI)
(72) Inventor: Virolainen, Jussi, 02240, Espoo (FI)
(74) Representative: Huhtanen, Ossi Jaakko

(57) **Abstract**

A method of controlling a conference call in a system which comprises a conference bridge for combining several audio signals arriving from terminals and transmitting the combined signal further to at least one of the terminals. The method comprises detecting substantially simultaneously active predetermined audio signals, such as speech signals, in the audio signals of the conference bridge inputs and filtering the audio signals of the inputs with substantially different filters when there is more than one simultaneously active predetermined audio signal. The filtered audio signals are combined into one signal, and the combined signal is transmitted to at least one terminal.

## Description

### FIELD OF THE INVENTION

The invention relates to teleconferencing systems and particularly to arranging a teleconference over one telecommunications channel.

### BACKGROUND OF THE INVENTION

Various audio and video conferencing services have been available for long, particularly in circuit-switched telecommunications networks. Teleconferencing systems can be divided into distributed and centralized systems, of which the latter ones have turned out to be more advantageous in providing teleconferencing services, considering the service providers and the implementation of terminals.

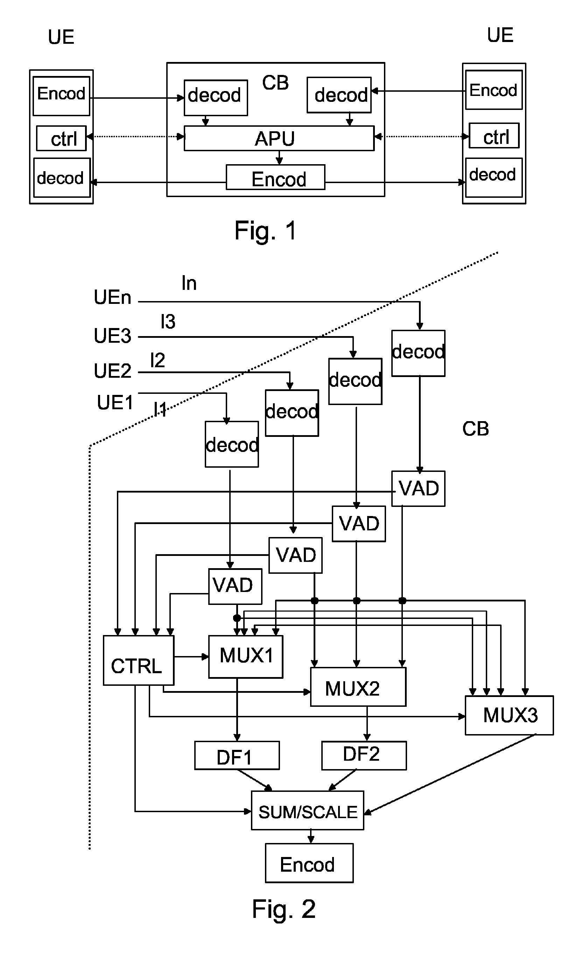

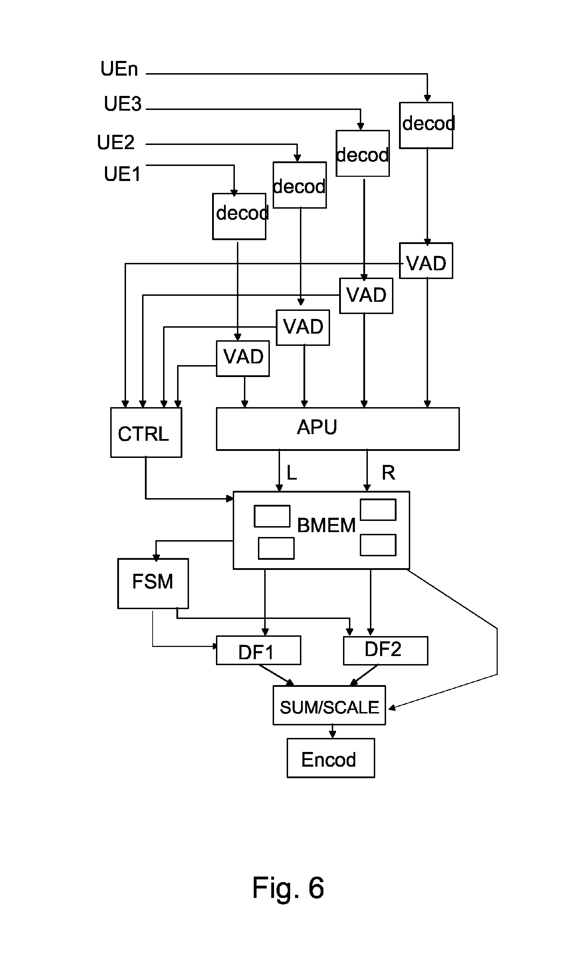

Figure 1 illustrates a prior art design for implementing a centralized audio conference service. The teleconferencing system comprises a conference bridge CB and several terminals UE that communicate with it. Each terminal UE receives the terminal user's speech by a microphone and encodes the speech signal with a speech codec known per se. The encoded speech is transmitted to the conference bridge CB, which decodes the speech signal from the received signal. The conference bridge CB combines the speech signals received from different terminals in an audio processing unit APU using a prior art processing method, after which the combined signal comprising several speech signals is encoded by a speech codec known per se and transmitted back to the terminals UE, which decode the combined speech signal from the received signal. An audible audio signal is produced from the combined speech signal by loudspeakers or headphones. To avoid harmful echo phenomena, the audio signal transmitted to the conference bridge by a terminal is typically removed from the combined audio signal to be transmitted to that terminal.

The combined signal is produced in the conference bridge typically as a single-channel (monophonic) audio signal or as a two-channel (stereophonic) audio signal. In the conference bridge, a spatial effect, known as spatialization, can be created artificially in a two-channel audio signal. In that case the audio signal is processed to give the listeners the impression that the conference call participants are at different locations in the conference room. In that case the audio signals to be transmitted on different audio channels differ from one another. When a single-channel audio signal is used, all speech signals (i.e. the combined signal) are transmitted as mixed on the same audio channel.

When one audio channel is used, typically only one data transmission channel is employed for speech transmission. Only one data transmission channel is typically also used when more than one audio channel is employed but there are also solutions where the audio signals of other participants are transmitted to each conference call participant on separate channels or sub-channels. Solution of this kind is described e.g. in WO 9 953 673. Other prior art teleconferencing systems, which are variations of the basic design presented above, are described e.g. in US 6,125,115 and US 5,991,385.

A problem associated with the prior art solutions is that they are poorly applicable to transmission of several simultaneous audio signals generated during a conference call on a channel with a narrow transmission band when a pre-determined speech codec is used. In most teleconferencing systems there is only one monophonic transmission channel available between the conference bridge and the terminal. If two or more conference call participants talk at the same time during a conference call, prior art solutions allow either transmission of the audio signal of only one participant at a time on a monophonic transmission channel or transmission of the audio signals of all participants talking simultaneously as combined into one monophonic audio signal. In the former case one hears the audio signal of only one participant at a time whereas in the latter case simultaneous audio signals cannot be provided with a spatial difference, i.e. the terminal user hears all the simultaneous audio signals as coming from the same point, which makes it difficult to distinguish different speakers from one another, for example. The problem is emphasized particularly in mobile communication networks and in other similar networks where there is often only one, typically circuit-switched, traffic channel available between the terminal and the conference bridge.

One solution proposed for the problem caused by two simultaneous speakers, for example, is the use of time divisional multiplexing (TDM) or frequency divisional multiplexing (FDM). In time divisional multiplexing e.g. two simultaneous audio signals, which are sampled at a sampling frequency of 8 kHz, for example, are first low-pass filtered at a cut-off frequency of e.g. 2 kHz and after this the band-limited audio signal is downsampled at a sampling frequency of 4 kHz, in which case the information contents of both audio signals are compressed into half. These downsampled audio signals are transmitted on a 4-kHz monophonic channel in time divisionally multiplexed form. Correspondingly, in frequency divisional multiplexing one of the above-mentioned 2- kHz band-limited audio signals is modulated to a band of 2 to 4 kHZ and the other one remains on a band of 0 to 2 kHz. These band-limited audio signals are added up and transmitted as one monophonic audio signal. In both cases the receiving terminal demultiplexes both audio signals from the monophonic audio signal.

A disadvantage of both the embodiments described above is that simultaneous audio signals have to be downsampled from 8 kHz to 4 kHz before multiplexing, which considerably impairs the quality of the audio signal. A further disadvantage is that time divisional multiplexing, in particular, may further reduce the quality of the coding used on the transmission channel, especially if the codec used is a speech codec. Several speech codecs employ 'linear prediction' which utilizes earlier speech samples for encoding/decoding. If in this case every other sample is from a different signal, the quality of coding deteriorates clearly. A further disadvantage associated with frequency divisional multiplexing is that the codec typically transfers the lower frequency band better than the upper band, which causes distortion.

### BRIEF DESCRIPTION OF THE INVENTION

The object of the invention is to provide a method and an apparatus implementing the method to solve or at least mitigate the above-mentioned problems. The objects of the invention are achieved with a method, a conference bridge apparatus, a terminal, computer programs and an audio signal which are characterized by what is disclosed in the independent claims.

The preferred embodiments of the invention are disclosed in the dependent claims.

The invention is based on the idea that a conference call is controlled in a system which comprises a conference bridge for combining audio signals arriving from several terminals and for transmitting the combined signal further to at least one terminal, typically to several terminals, using a monophonic transmission channel. The method comprises first detecting substantially simultaneously active pre-determined audio components, such as speech signals, in the audio signals of the conference bridge inputs, in which case the number of these audio components can preferably also be determined. If at least two simultaneously active audio signals are detected, the audio signals of the inputs are filtered with substantially different, typically complementary, filters to form separable signals, after which the filtered, separable audio signals are combined into one signal and transmitted to at least one terminal typically on a monophonic transmission channel. According to a preferred embodiment of the invention, the combined audio signal is encoded with an audio codec before it is transmitted to the terminal. Furthermore, according to a preferred embodiment of the invention, the terminal receives the combined signal, which is decoded with a corresponding audio codec and from which the audio signals of the inputs are separated by filtering the combined signal with filters substantially similar to those in the conference bridge, after which the terminal creates a spatial effect of the conference call participants on the basis of the filtered signals. According to a preferred embodiment of the invention, the filters are substantially complementary comb filters.

An advantage of the method according to the invention is that an audio signal with a substantially good quality can be transmitted on a monophonic transmission channel also when several conference call participants talk simultaneously. Yet the bandwidth needed to transmit several simultaneous audio signals is preferably small. The advantages of the invention are emphasized particularly when the audio signal is encoded with a speech codec before transmission to the transmission channel. An advantage of a preferred embodiment of the invention is that the invention is very simple and economic to implement and does not require a high processing capacity.

A further advantage of the invention is that it allows to guarantee a sufficient voice quality for a three dimensionally spatialized audio signal, in which case a three dimensional spatial effect of the other conference call participants can be created for a conference call participant.

### BRIEF DESCRIPTION OF THE FIGURES

The invention will now be described in greater detail by means of preferred embodiments with reference to the accompanying drawings, in which
Figure 1 shows a prior art basic design for implementing a centralized audio conference service;
Figure 2 shows a conference bridge arrangement according to an embodiment of the invention;
Figure 3 shows features of filters according to an embodiment of the invention;
Figure 4 shows a simplified structure of a terminal according to the invention;
Figure 5 shows a teleconferencing arrangement according to the invention in general;
Figure 6 shows a conference bridge arrangement according to a preferred embodiment of the invention; and
Figure 7 is a flow chart illustrating essential steps of the method according to the invention.

### DETAILED DESCRIPTION OF THE INVENTION

The invention will be described here on the general level without restricting the invention to any particular telecommunications system. The advantages of the invention are most apparent in various circuit-switched networks, such as the GSM network, the UMTS network, and in teleconferencing arrangements used in PSTN fixed networks. The invention is not, however, limited to circuit-switched networks only, but it also provides advantages in packet-switched telecommunications networks, such as the GSM-based GPRS network, the UMTS network, and in teleconferencing arrangements used via the Internet, where the bandwidth to be used in audio coding is to be kept small and thus the transmission bandwidth not used for audio coding can be employed for transmitting video images, for example.

In the following, the invention will be illustrated by means of a simplified embodiment with reference to Figure 2. Figure 2 shows a conference bridge CB, which comprises inputs (I₁,..., Iₙ) for receiving audio signals arriving from several terminals (UE₁,..., UEₙ). The audio signals arriving from the terminals are typically encoded with a transmitting codec known per se, and thus the audio signals are correspondingly decoded by a receiving codec (Decod₁,..., Decodₙ) connected to each input. However, encoding of audio signals by terminals and decoding in the conference bridge are not relevant to the invention. Audio signals generated in the conference bridge, such as background sounds or effects that are to be attached to the audio signal to be combined, can be fed into one or more of the above-mentioned inputs. Audio signals entering the conference bridge typically comprise different audio components, such as speech, other speech-like sounds, e.g. coughs, background noise and possibly above-mentioned artificially created audio signals. As regards further processing of the combined audio signal to be transmitted from the conference bridge, it is essential for the method of the invention that one is able to determine those audio signals from the incoming audio signals that comprise substantially simultaneous audio components, typically speech, that are to be transmitted to the other participants of the conference call in the combined audio signal.

This determination can be implemented by an arrangement shown in Figure 2, where each conference bridge input comprises, preferably after the receiving codec (Decod), a VAD unit (VAD₁,...,VADₙ, Voice Activity Detection), which is arranged to detect speech in a received audio signal. In practice an audio signal arriving in the VAD unit is arranged in frames, each of which comprises N samples. The VAD unit checks each frame and, as a result of the check, sends a control signal indicating whether or not active speech was found in the frame checked to the control unit CTRL. Thus a control signal from each VAD unit is supplied to the control unit CTRL, i.e. n control signals altogether, from which the control unit CTRL can determine at least whether the frames of the incoming audio signals comprise simultaneously one or more active speech signals. This can be implemented e.g. as follows: the control signals arriving from the VAD unit are signals enabling Boolean algebra (e.g. speech = 1, no speech = 0), in which case the control unit can be implemented by means of simple OR or XOR ports, for example. In that case the output of the control unit will be a Boolean signal indicating whether the frames include simultaneously 0 or 1 active speech signal (e.g. signal value = 0) or 2 or more simultaneously active speech signals (e.g. signal value = 1).

In this arrangement the VAD units can be replaced by means which employ audio signal checking, known as ACD units (Audio Content Detector), which analyze the information included in an audio signal and detect the presence of the desired audio components, such as speech, music, background noise, etc. The output of the ACD unit can thus be used for controlling the control unit CTRL in the manner described above.

Furthermore, the receiving audio component can be detected using the meta data or control information preferably attached to the audio signal. This information indicates the type of the audio components included in the signal, such as speech, music, background noise, etc.

To illustrate the invention and simplify the embodiment, it is assumed in the example shown in Figure 2 that the system can distinguish between at most two simultaneous audio signals in a combined signal to be transmitted on a monophonic channel. For processing at most two simultaneous audio signals, the conference bridge comprises three multiplexers MUX1, MUX2 and MUX3. Each incoming signal (I₁,..., Iₙ) is preferably supplied to all three multiplexers after VAD detection. If at most one desired audio component, such as speech, is detected simultaneously in the audio signals arriving from the terminal UE, the output signal of the control unit CTRL is used for controlling the multiplexers so that multiplexer MUX3 lets this monophonic signal as such to a sum/scale unit SUM/SCALE. If two desired audio components, such as speech, are simultaneously detected in the audio signals arriving from the terminal UE, the first multiplexer MUX1 is controlled so that it lets the first audio signal to a first digital filter DF1 and the second multiplexer MUX2 lets the second audio signal to a second digital filter DF2. The outputs of the digital filters DF1 and DF2 are supplied to a sum/scale unit SUM/SCALE, where the digitally filtered signals are added up and scaled into one monophonic signal. The output of the sum/scale unit SUM/SCALE is supplied to an audio codec (Encod) used in the system where it is encoded for a signal to be transmitted to the transmission path.

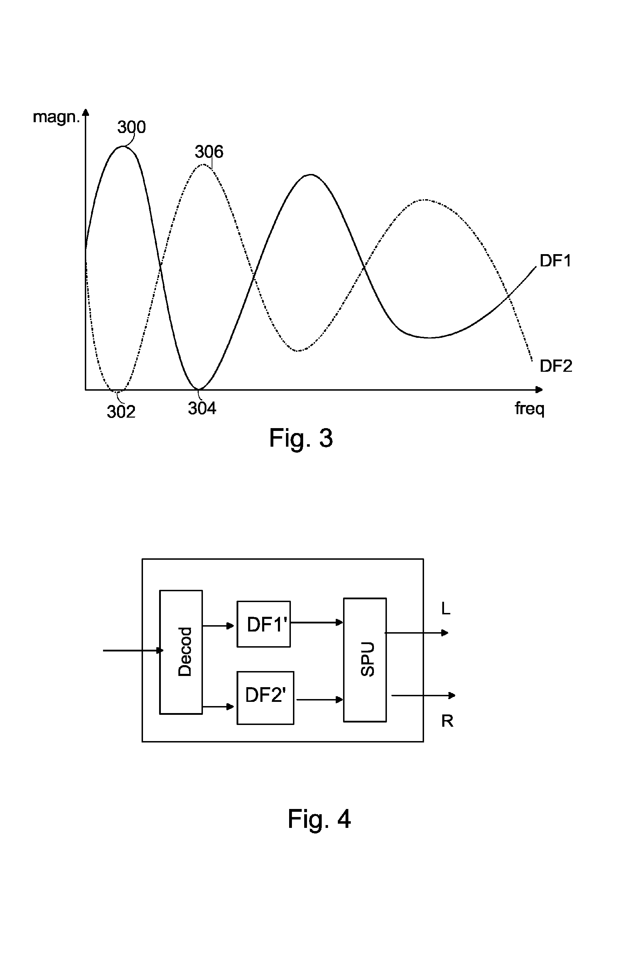

The digital filters DF1 and DF2 are preferably designed so that they are substantially complementary to each other both in respect of the stop band and the pass band. This can be illustrated by means of Figure 3, which shows a simplified example of the amplitude responses of both filters DF1 and DF2 as a function of frequency. As is seen in Figure 3, the minimum value 302 of the amplitude response of the second filter DF2 corresponds to the amplitude peak 300 of the first filter DF1 substantially at the same frequency. Furthermore, the frequency band of the pass band of the first filter DF1 substantially corresponds to the stop band of the second filter DF2. Correspondingly, the minimum value 306 of the amplitude response of the first filter DF1 corresponds to the amplitude peak 304 of the second filter DF2 substantially at the same frequency, too. In a practical embodiment the filters do not need to be exactly complementary, as appears from Figure 3. In other words, the stop band and the pass band do not need to be totally stopping or passing bands but it is sufficient that their amplitude responses differ enough from each other so that the signals received from the terminal after filtration substantially differ from one another again. Thus the attenuation of stop bands does not necessarily need to be particularly high but attenuation of about-6-10 dB, for example, is typically sufficient. In addition, as is seen in Figure 3, it is preferable to implement the digital filters DF1 and DF2 as two comb filters whose amplitude responses are substantially uniform and whose stop and pass bands are on the opposite frequency bands with respect to each other. The transfer function of the comb filter can be presented e.g. as follows: H(z) = 1 + gz^{-m} , where m is the duration of the filter delay and g the amplification factor of the effect. A complementary filter is achieved by changing the sign of g into the opposite one. Thus the comb filter is simple to implement and most preferably only the two filter parameters described above are needed to control it. The width of the stop and pass bands is preferably only a few hundred hertz, about 100 to 300 Hz. Alternatively, the filters can be implemented e.g. by means of a filter bank, which comprises band pass filters with a suitable width and different pass bands.

According to a preferred embodiment, the width of the stop and pass bands can be dimensioned according to the properties of human hearing system. The width of the bands can be substantially equal to what is known as a critical bandwidth, which can be approximated, for instance, by the Equivalent Rectangular Bandwidth (ERB). The ERB is known to a person skilled in the art in audio design for example from the book: *An Introduction to the Psychology of Hearing*, Brian C.J. Moore, Academic Press, 1997. Perceptual filter banks are implemented in audio codecs, for example. The width of the stop and pass bands of complementary digital filters can preferably be dimensioned to substantially match the ERB bandwidths or parts thereof. When dimensioning the bands, it has to be noted that the width of the stop and pass bands of comb filters are approximately equal when measured on a linear frequency scale, but the ERB bandwidths are approximately equal when measured on a logarithmic frequency scale.

Furthermore, according to a preferred embodiment of the invention, the filters can be complementary only in a certain section of the frequency band. In that case both speech signals can be filtered only on a certain band, such as 500 to 3000 kHz, in which case the fundamental speech frequency (below 500 Hz) and high frequencies (over 3 kHz) are only scaled and added up as such. In that case localizing the sound source in the lower section of the filtered band on the basis of interaural time difference and in the upper section of the band is based on the amplitude differences between the signals. At lower frequencies (below 500 kHz) it is, however, more difficult to perceive the voice direction and the inclusion of high frequencies (over 3 kHz) does not substantially improve the situation, either. Thus filtering can be performed on a band that is substantially smaller than the width of the whole speech encoding band. It is naturally clear that filtering can also be performed on two or more bands or in frequency ranges different from those described above, e.g. only on one band of 600 to 2000 Hz or on two separate bands of 400 to 1200 Hz and 1800 to 2900 Hz. The conference bridge CB thus processes one or more simultaneous audio signals for transmission on a monophonic channel to terminals participating in a conference call. If there is only one audio signal, it is transmitted to the other conference call participants as such without filtering, in which case the whole bandwidth available can be used for transmitting one audio signal. If there are two simultaneous audio signals, they are filtered as described above, after which the filtered signals are added up and scaled into one audio signal, for which the whole available bandwidth can also be used. Filtering reduces the frequency content of the original audio signals and causes slight colouring of the audio signals but its effect on the intelligibility of audio signals is considerably smaller than in prior art downsampling. The spatial difference achieved by filtering of this kind improves the intelligibility of speech more than the voice colouring caused by filtering reduces it. In speech certain phonemes, such as s, f, k, p, include high frequencies which drop out in the prior art methods, which impairs speech intelligibility. This does not happen in the method according to the invention because the frequency band is the same as in the original signal, only certain band sections have been partly filtered out.

Even though an audio signal can be transmitted to the transmission path without speech encoding, the best benefit of the invention is derived from speech encoding, in particular. Simultaneous audio signals are pre-processed by the filtering of the invention to make them easier to speech-encode than e.g. prior art downsampled audio signals, which are either frequency-multiplexed or time-multiplexed.

The terminal employed in the method according to the invention has to be able to separate two combined simultaneous and filtered audio signals from a received monophonic audio signal. Terminal of this kind is exemplified in Figure 4. The terminal receives a combined audio signal transmitted from the conference bridge and decodes the monophonic audio signal with a receiving codec. The decoded audio signal is supplied to two digital filters DF1' and DF2', whose functionality preferably substantially corresponds to the digital filters DF1 and DF2 used in the conference bridge. Thus filters DF1' and DF2' at least partly separate original simultaneous audio signals from the decoded audio signal; the filter DF1' filters the first audio signal and the filter DF2' the second audio signal. Even though in an optimal case the signals could be separated from each other completely, in respect of filtering it is essential that a sufficient channel difference is formed between the audio signals, in which case the listener can sense that the speakers are in different locations.

The terminal comprises stereo reproduction means, such as two loudspeakers or stereo earphones, to which the audio signals corresponding to the original simultaneous audio signals and arriving from the filters DF1' and DF2' are supplied for reproduction; the first audio signal to the left (L) stereo channel and the second audio signal to the right (R) stereo channel, for example. If the signals can be separated from each other completely, the terminal user preferably hears both simultaneous audio signals, the first one from the left stereo channel and the second one from the right stereo channel. In practice, however, the signals cannot be completely separated from each other and thus the terminal user hears the first audio signal more from the left channel and the second audio signal more from the right channel. The human auditory system converts even a small amplitude difference into a spatial difference. When headphones are used, the signals arriving from the filters can be reproduced as such for the left and the right ear, which gives the listener the impression of spatial difference. When loudspeakers are used, the listener hears both channels with both ears and thus cross-talk cancellation may be needed. To create a spatial effect, the stereo expansion method described in the applicant's earlier European application EP01660178.3, for example, can be employed in the terminal. In that case the terminal preferably comprises stereo expansion means, e.g. the stereo expansion network described in the above-mentioned application. For listening through loudspeakers the spatial effect can correspondingly be improved e.g. by the 'Virtual Loudspeaker' method or another similar method. One feasible system is described in Ole Kirkeby and Philip A. Nelson, *Virtual Source Imaging Using the 'Stereo Dipole',* 103^{rd} Audio Engineering Society Convention, 26-29 September, 1997, New York, AES Preprint 4574 (J-10), 1997.

The terminal may preferably also comprise a spatialization unit SPU, to which the filtered audio signals from filters DF1' and DF2' are supplied before they are fed to the reproduction means. The spatialization unit creates an artificial space model of the conference space where the different conference call participants are provided with locations of their own. The different locations of two simultaneously talking participants are created by means of time and/or amplitude differences between the channels to be formed in the signal components of the stereophonic audio signal. The audio signals processed in the spatialization unit are then supplied to the reproduction means. This enables creation of a more natural sounding spatial effect of the conference space for the terminal users than by only feeding different signals to different stereo channels. There are also methods other than the above-mentioned stereo expansion and spatialization for creating the spatial effect in the terminal. These two methods are described only as preferred embodiments without limiting the invention to them.

It should be noted that the filtering and spatialization described above are preferably passive processes which do not require separate control information and are thus independent of the monophonic audio signal arriving from the conference bridge. Filtering, in particular, is easy to perform with respect to computation and thus the need for processing capacity is small.

The filters DF1' and DF2' included in the terminal function preferably substantially in the same manner as the filters DF1 and DF2 in the conference bridge. The features of the terminal filters do not, however, need to correspond exactly to those of the conference bridge filters. For example, the amplitude responses of the terminal filters and the conference bridge filters have to be substantially equal but e.g. amplification of the stop and pass bands of the terminal filters can be smaller than in the conference bridge filters.

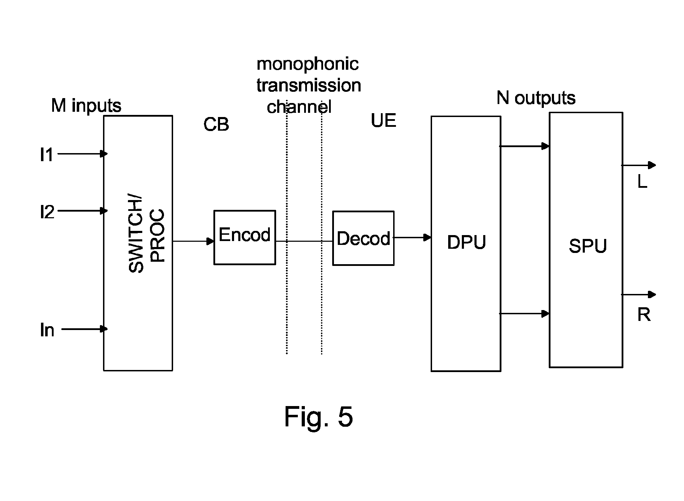

In the above, the invention was described by a simplified example where only two simultaneous audio signals can be separated in a combined mono signal. However, the invention can be implemented on a general level without limiting the number of simultaneous audio signals in the combined signal. Yet it should be noted that in practice a situation where there are more than two simultaneous speakers in a conference call is rare. The method according to the invention can be generally described by the system shown in Figure 5. In Figure 5 the input (I₁,..., Iₙ) to the conference bridge CB comprises M simultaneous audio signals, which are processed in a switching and processing unit SWITCH/PROC. The switching and processing unit SWITCH/PROC comprises, as described above, a separate digital filter for each input Iₙ. These filters are used if several simultaneous audio signals are detected. Each of the simultaneous audio signals is filtered with a separate filter and they are combined into one monophonic signal, which is encoded with an audio codec (Encod) before transmission to the monophonic transmission channel.

It is obvious to a person skilled in the art that before transmission to the transmission channel, the audio signal is also subjected to other procedures that are necessary for transmitting the signal in the telecommunications system used. These procedures include channel coding and modulation of the signal to the frequency to be used. They are telecommunications system specific and are not relevant to the invention as such. The monophonic transmission channel to be used may be e.g. a traffic channel of the GSM system, a traffic channel of the UMTS system, a traffic channel of the Bluetooth network, a fixed telephone connection PSTN or a packet-switched channel, such as Internet teleconference or a WLAN packet channel, on which the bandwidth to be used should preferably be kept small.

In the terminal receiving the audio signal the received monophonic audio signal is decoded (Decod) with an audio codec and supplied further to a digital processing unit DPU. The digital processing unit DPU preferably substantially comprises the same filter functions that are used in the conference bridge CB for filtering simultaneous audio signals. Thus the signals corresponding to the original simultaneous audio signals (M signals) can be separated from each other sufficiently by supplying the received decoded monophonic audio signal to all filters. This way the filtered audio signals are provided with a channel difference which is sufficient for creating a spatial space effect for the listener. The terminal may preferably comprise a spatialization unit SPU to which the M audio signals are further supplied and which processes the audio signals by attaching time difference to them in addition to the amplitude difference. The time difference defines separate locations for different conference call participants. The output of the spatialization unit is N processed audio signals whose number N can be either equal or unequal to the number M of simultaneous audio signals in the conference bridge (N=M or N≠M). These N audio signals are then supplied to the reproduction means, which may comprise stereo reproduction means or another multi-channel audio system, such as a 5.1 system.

The separation of simultaneous audio signals from a received monophonic signal described above and processing of the separated signals in a spatialization unit can preferably be carried out without separate control information. According to a preferred embodiment of the invention, control information or metadata, which can be transmitted as an inband signal or as an outband signal, can be added to the monophonic signal to be transmitted from the conference bridge. This control information can be used for controlling both filtering and spatialization in the terminal. This may be necessary particularly when there are more than two simultaneous audio signals. In that case the control information transmitted in the audio signal preferably reduces the processing load of the terminal in connection with filter switching, for example.

Information on whether one or more audio signals have been detected can be transmitted e.g. in a speech frame and thus the terminal can use this information for selecting suitable comb filters or respective digital filters. If only one audio signal has been detected, digital filtering is preferably not performed at all. On the other hand, if several simultaneous audio signals are detected, filtering is performed both in the terminal and in the conference bridge to provide a spatial difference.

Digital filters in the conference bridge and terminal can preferably be adaptive, too. For example, filter parameters can be calculated adaptively for the filters in the conference bridge depending on the properties of the speech signals. These filter parameters or the parameters calculated from them can be transmitted to the terminal filters as additional information with the speech frames.

According to a preferred embodiment of the invention, adaptivity can at its simplest be implemented by analyzing the fundamental frequency of the speaker's speech and selecting the filter that is more suitable for the speaker from among two filters. For example, a speaker whose speech has a higher fundamental frequency is always filtered with filter DF1, whereas a speaker whose fundamental frequency is lower is filtered with filter DF2.

According to another embodiment of the invention, adaptive filtering can be implemented by analyzing the spectrum of each speaker's speech for a certain time in the conference bridge. The spectra are compared with each other in pairs and complementary filters are formed by emphasizing the differences of the spectra. When certain two speakers are talking, the filters determined this way are selected. The prerequisite for this embodiment is that one can transmit both filter parameters and information on which speakers are active to the terminal.

According to a preferred embodiment, when only one audio signal is detected in the conference bridge, it is transmitted as unfiltered to the terminal, which does not filter the signal, either, but spatializes it so that it is perceived substantially only on either side of the terminal user. If another speaker joins the conversation (two simultaneous audio signals), the complementary filtering and spatialization described above are performed, in which case the original audio signal is placed on the same side of the listener as earlier and the new audio signal is placed on the other side of the listener. In this embodiment the identifier corresponding to the speaker or location information is transmitted as metadata to the terminal so that the location of the first speaker does not change.

It is, however, simplest and most advantageous to implement the invention in situations where there are only two simultaneous audio signals. For this reason and because situations of more than two simultaneous speakers in a conference call are very rare, three or more simultaneous audio signals can be filtered to two channels according to a preferred embodiment of the invention. This preferably occurs as follows: if more than two, e.g. three, simultaneous audio signals are detected in the conference bridge, the first detected audio signal is filtered with the first filter and the other audio signals are first added up and then the combined audio signal is filtered with the second filter. This way the first audio signal, such as a speech signal, is prioritized as the signal to be transmitted independently and several interrupting speech signals are combined into one audio signal. In that case the terminal user hears the first audio signal from his left side, for example, and the other simultaneous audio signals substantially from the same location on his right side.

According to a preferred embodiment of the invention, the terminal may also comprise a frequency envelope interpolator, which can be used for reducing colouring caused in the speech signal by several successive filterings.

According to a preferred embodiment of the invention, one unfiltered audio signal to be transmitted from the conference bridge can be flexibly changed into several filtered audio signals in a situation where another simultaneous audio signal is detected in addition to one audio signal detected earlier. In that case the first unprocessed audio signal is not immediately connected to a full-capacity filtering in the conference bridge but the properties of the filters to be used are adjusted dynamically in a certain time slot, e.g. 200 ms, so that simultaneous audio signals are not filtered at all at the beginning of the time slot and filtering substantially reaches the desired capacity after this time slot. The terminal user hears this e.g. as follows: first the user hears the first audio signal from the front but when another simultaneous audio signal is detected, the audio signals are flexibly transferred during the time slot so that the user hears the first audio signal from his left side and the second audio signal from his right side, for example.

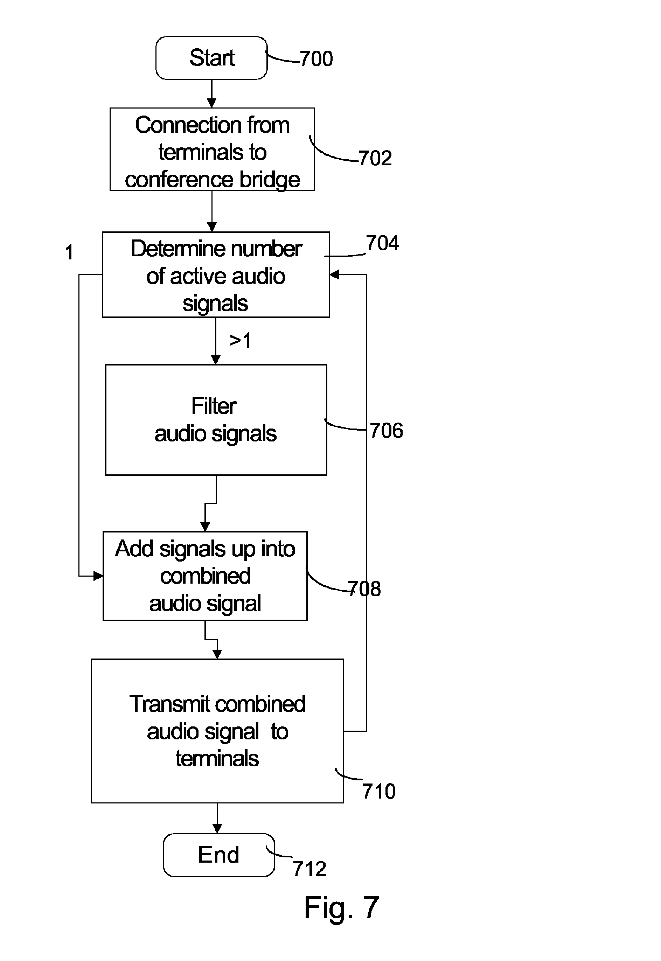

Filtering control of the invention can be further improved by preventing the effects of different noise bursts on the control of the filters. According to a preferred embodiment of the invention, this can be implemented by an arrangement of Figure 6, for example. Also in this case the input of each conference bridge comprises, preferably after the receiving codec (Decod), a VAD unit (VAD₁,...,VADₙ, Voice Activity Detection), which is arranged to detect speech in the audio frames of the received audio signal. The VAD unit checks each frame and as a result of the check transmits a control signal indicating whether or not active speech was found in the frame checked to the control unit CTRL. From the control signals received from each VAD unit the control unit CTRL determines e.g. in the manner described above whether the frames of the incoming audio signals simultaneously comprise one or more active speech signals. The audio frames of the audio signals of different inputs are fed into an audio processing unit APU, which forms a combined audio signal, whose audio frames are fed further into a buffer memory BMEM. At the same time, the result of the determination described above and obtained from the control unit CTRL is attached to each audio frame of the combined audio signal as a separate flag (e.g. one bit). Thus each audio frame of the audio signal stored in the buffer memory includes information which indicates whether the audio frame in question comprises simultaneous speech from one or more the conference bridge inputs.

Now the information indicated by the above-mentioned flag can be preferably utilized in controlling multiplexers: whether audio signals are supplied to the filters DF1 or DF2 or directly to the sum/scale unit SUM/SCALE is determined according to the flag value included in several successive audio frames. Thus the controlling of multiplexers can be determined e.g. from the value of the flags of three successive audio frames. Consequently, unnecessary switching of the filtering function can preferably be avoided in a situation where a single audio frame or e.g. two successive audio frames comprise an additional noise burst, such as background noise, which the VAD unit misinterpreted as speech simultaneously with a real speech signal. If the flag values of the audio frames in the buffer indicate that the noise burst was only a short one, the multiplexers are preferably controlled so that the codec or its mode is not switched at all. If the flag values of all three audio frames indicate that the filtering function should be switched, the multiplexers are controlled to perform the switch. It is clear that three audio frames is only an example of how many audio frames can be examined in this connection. The suitable number of audio frames may naturally vary depending on the implementation of the system, and the number of audio frames to be examined is not necessarily the same as the number of audio frames stored in the buffer. Since buffering always causes a delay in data transmission between the sound source and the listener, it is preferable to keep the number of frames to be stored in the buffer small, e.g. three frames. However, the length of a frame can be changed in the conference bridge, in which case the number of frames that fits in the buffer may also vary. In respect of audio signal processing, it is advantageous to keep the length of the audio frame produced by the conference bridge the same as the frame length of the codec in use, the length being typically a few tens of milliseconds (e.g. 20 ms in the AMR), but the length of the audio frame produced by the conference bridge may also differ from the length of the codec frame.

Examination of the flag values of the audio frames in the buffer and controlling of the multiplexers can be preferably performed by another control unit, which can be e.g. a finite state machine FSM according to Figure 6. The state machine has information on the present state of filtering control and on the value of the flags of the next audio frames in the buffer memory (a certain number or all audio frames included in the buffer memory). Based on the deduction used, the state machine generates a control signal to be transmitted to the multiplexers.

According to an alternative embodiment, speech can be supplied to comb filters instead of directing it past them to a SUM/SCALE unit in a situation where there is only one speaker. If the filters are genuinely complementary, this does not differ from supplying the signal directly to the SUM/SCALE unit because the sum of the comb filter outputs is unit amplification. This solution preferably simplifies the structure of the conference bridge. When a new speaker joins the conversation, the first filter can be assigned to the new speaker and the first speaker is dropped from this filter.

According to a preferred embodiment of the invention, separate VAD units are not necessarily needed at all but VAD detection can be performed directly in the receiving codec (Decod) of each conference bridge input. In that case the receiving codec is arranged to detect the contents of the received frames, i.e. whether they include speech or not. This detection is carried out according to the type of the received frame: the codec determines whether the frame includes speech or some interference caused by background noise. This can be used for determining the value of a 'speech flag'; if the value of the speech flag indicates that the audio frame includes speech, this indication can be supplied directly from the receiving codec to the control unit CTRL without a separate VAD unit in between. This preferably saves processing capacity in the conference bridge CB because separate VAD calculation is not needed. The VAD detection in the receiving codec is known per se to a person skilled in the art and described in greater detail in application WO 01/08136.

According to a preferred embodiment of the invention, the terminal shown in Figure 5 may also comprise a mono/stereo estimator (M/S estimator), which receives the audio signals arriving from the filters and analyzes them. By determining the amplitude differences generated in the signals in the mono/stereo estimator, an estimate of how many audio sources are used simultaneously and how they are located with respect to one another can be formed. The terminal can utilize this information: when there are e.g. two speakers, the filtered signals to be reproduced are selected, or when there is one speaker, the signal from the decoder output (before filtering) can be directly reproduced to the listener. This way unnecessary colouring of the signal of one speaker can be avoided. The function of the mono/stereo estimator is known per se to a person skilled in the art and one embodiment of it is described in greater detail application EP 955789.

Implementation of the essential method steps according to the invention can be generally illustrated by a flow chart shown in Figure 7. Various embodiments of the invention were described above. However, these embodiments have certain common steps that are essential to the implementation to the invention. These are illustrated in Figure 7. If we examine the conference bridge, in the initial situation (700) several terminals connected to different inputs (702) of the conference bridge participate in the conference call. In the conference bridge certain substantially simultaneously active audio signals (704) are detected in the audio signals of the inputs, in which case their number can also be determined. These certain audio signals are pre-determined audio signals, which are typically speech signals, but may also be some other audio signals, such as music or spatial sounds created artificially in the conference bridge. At its simplest, the above-mentioned determination of the number comprises the distinction between one and several simultaneously active audio signals, but the exact number of the active audio signals can also be determined.

Next, if at least two simultaneously active pre-determined audio signals are detected, these audio signals are supplied to filtering (706). Preferably complementary filters, e.g. comb filters, are employed in filtering. Thus the filtered signals can be made to differ sufficiently from one another so that the information needed to reconstruct the signals at the receiving end can be generated. The signals filtered from the filter outputs are then added up into a combined audio signal (708), which is scaled, if necessary.

In the last essential step the audio signal combined in the conference bridge is transmitted to one terminal, typically on a monophonic transmission channel (710). It should also be noted that there is feedback from the filtering step (706) to an earlier step where the number (704) of substantially simultaneously active audio signals is determined. Thus the number of simultaneously active audio signals is monitored constantly during the conference call and the filtering control can be preferably switched during a speech connection. It should be further noted that the figure shows an alternative embodiment for the detection step (704) of substantially simultaneously active pre-determined audio signals. If according to this alternative only one audio signal is detected, the signal is directly supplied to adding and scaling (708). This preferred embodiment is not, however, necessary for implementing the invention. As was described above in connection with an embodiment, one predetermined audio signal can also be filtered before it is supplied to adding and scaling.

The conference bridge is typically a server which is configured to a telecommunications network and the operation of which is managed by a service provider maintaining the conference call service. The conference bridge decodes the speech signal from the signals received from the terminals, combines these speech signals using a processing method known per se, encodes a combined audio signal with the selected transmitting codec and transmits it back to the terminals. The conference bridge may also be a terminal which can participate in the conference call but which is also arranged to support management of the conference call, typically management of control information on the conference call. Also in this case, however, the speech signals are typically combined into a combined audio signal as a network service in the conference bridge. Terminals that are partly capable of functioning as a conference bridge and support the conference call include Nokia® 9110 and 9210 Communicator. Furthermore, a set top box for the digital television network can function as a conference bridge. The conference bridge according to the invention comprises at least means for determining how many of the audio signals arriving in the conference bridge include substantially simultaneously audio components that are to be transmitted to other conference call participants in a combined audio signal. The conference bridge according to the invention further comprises filtering means for filtering several simultaneous audio signals and for combining them into one monophonic audio signal. In addition, the conference bridge according to the invention comprises control means for controlling the filters on the basis of the above-mentioned number determination.

The invention can also be utilized in limited conference calls which are intended for mobile communication systems, in particular, and in which usually at most three terminals can create a conference call between themselves without having to book a conference call from an operator. If the terminal comprises stereo reproduction means and means for generating a spatial difference, this feature is preferably indicated to the network, in which case the serving network element, such as the base station, functions as a conference bridge which utilizes the method according to the invention.

It should be noted that the functional elements of the conference call arrangement according to the invention and the parts belonging to it, such as the conference bridge and the terminal, can be preferably implemented as software, hardware or as a combination of these two. Software comprising commands that can be read by a computer e.g. to control a digital signal processing processor DSP and perform the functional steps of the invention is particularly suitable for implementing the filtering control according to the invention. Filtering control can be preferably implemented as a program code, which is stored in memory means and can be performed by a computer-like device, such as a personal computer (PC) or a mobile station, to provide filtering functions by the device in question. Furthermore, the filtering functions of the invention can also be loaded into a computer-like device as program update, in which case the functions of the inventions can be provided in prior art devices.

The invention may utilize various audio and speech codecs, such as EFR/FR/HR speech codecs ((Enhanced) Full/Half Rate Codec) known per se from GSM/UMTS systems and AMR and Wideband AMR speech codecs (Adaptive Multirate Codec), G.722, G.722.1, G.723.1, G.728, and various waveform codecs, such as G.711, and codecs used in MPEG1, MPEG2 and MPEG4 audio coding, such as an AAC codec (Advanced Audio Coding), which are suitable for encoding/decoding various audio formats. The term 'audio codec' thus refers both to traditional audio codecs, such as various waveform codecs, and to speech codecs used in different systems and codecs with a scalable bit rate, e.g. the CELP+AAC in accordance with MPEG-4. If more than two simultaneous audio signals are filtered in the embodiment, it is advantageous to use e.g. AMR and Wideband AMR speech codecs or an AAC codec, which are able to process with good results even audio signals that have been relatively badly distorted in filtering.

It is obvious to a person skilled in the art that, as the technology advances, the inventive concept can be implemented in various ways. The invention and its embodiments are thus not limited to the examples described above but they may be modified within the scope of the claims.

## Claims

1. A method of controlling a conference call in a system which comprises a conference bridge for combining several audio signals arriving from terminals and transmitting the combined signal further to at least one of said terminals, the method comprising the steps of
detecting substantially simultaneously active predetermined audio signals, such as speech signals, in the audio signals of said conference bridge inputs, **characterized by**
filtering at least two of said audio signals of the inputs with substantially different filters to form separable signals when there is more than one simultaneously active predetermined audio component,
combining the filtered, separable audio signals into one signal,
transmitting said combined signal to at least one terminal, and
separating in said at least one terminal said audio signals of the inputs from said combined signal by filtering said combined signal with filters substantially similar to the conference bridge filters.

2. A method according to claim 1,**characterized by**
encoding said combined signal with an audio codec before it is transmitted to at least one terminal.

3. A method according to claim 1 or 2, **characterized by**
creating a spatial effect of conference call participants in said at least one terminal on the basis of said separated signals.

4. A method according to claim 3, **characterized by**
creating a spatial effect by stereo expansion or spatialization of said filtered signals.

5. A method according to any one of the preceding claims, **characterized by**
filtering said audio signals of the inputs with substantially different filters in the conference bridge so that a substantial channel difference is formed in the filtered signals.

6. A method according to any one of the preceding claims, **characterized in that** said filters are substantially complementary comb filters.

7. A method according to any one of the preceding claims, **characterized by**
filtering the audio signals of said inputs with two substantially different filters.

8. A method according to any one of the preceding claims, **characterized by**
filtering the audio signals of said inputs with adaptive filters, the parameters of which are determined based on the properties of the speech signals.

9. A method according to claim 7 or 8, **characterized by**
filtering the first active audio signal with the first filter,
combining the audio signals that are simultaneously activated after said first active audio signal into a combined audio signal, and
filtering said combined audio signal with the second filter.

10. A method according to anyone of the preceding claims, **characterized by** determining the fundamental frequency of at least one incoming audio signal in the conference bridge, and
selecting or adjusting the filter to be used on said audio signal on the basis of the fundamental frequency that was determined.

11. A method according to claim 1, **characterized by**
determining the number of simultaneously active predetermined audio components by means of VAD units included in the inputs of the conference bridge or by means of ACD units which determine the audio content.

12. An apparatus for controlling a conference call (conference bridge) which is arranged to combine several audio signals arriving from terminals and transmit the combined signal further to at least one of said terminals, said apparatus being arranged to
detect substantially simultaneously active predetermined audio signals, such as speech signals, in the audio signals of the inputs of said apparatus, **characterized in that** the apparatus is further arranged to
filter said audio signals of the inputs with substantially different filters to form separable signals, when there is more than one simultaneously active predetermined audio signal,
combine the filtered, separable audio signals into one signal, and
transmit said combined signal to at least one terminal.

13. An apparatus according to claim 12, **characterized in that**
said apparatus is arranged to encode said combined signal with an audio codec before it is transmitted to at least one terminal.

14. An apparatus according to claim 12 or 13, **characterized in that**
said apparatus is arranged to filter said audio signals of the inputs with substantially different filters so that a substantial channel difference is created in the filtered signals.

15. An apparatus according to any one of claims 12 to 14, **characterized in that**
said filters are substantially complementary comb filters.

16. An apparatus according to any one of claims 12 to 15, **characterized in that**
said filters are adaptive filters, the parameters of which are determined based on the properties of the speech signals.

17. An apparatus according to any one of claims 12 to 16, **characterized in that**
said audio signals of the inputs are arranged to be filtered with substantially two different filters.

18. An apparatus according to claim 17, **characterized in that**
the first active audio signal is arranged to be filtered with the first filter,
the audio signals that are simultaneously activated after said first active audio signal are arranged to be combined into a combined audio signal, and
said combined audio signal is arranged to be filtered with the second filter.

19. An apparatus according to any one of claims 12 to 18, **characterized in that** the apparatus is arranged to
determine the fundamental frequency of at least one incoming audio signal, and
select or adjust the filter to be used on said audio signal on the basis of the fundamental frequency that was determined.

20. An apparatus according to any one of claims 12 to 19, **characterized in that** the number of simultaneously active predetermined audio components is arranged to be determined by means of VAD units included in the inputs of the conference bridge or by means of ACD units which determine the audio content.

21. A terminal which is arranged to receive a combined audio signal transmitted from a conference bridge, **characterized in that** the terminal is also arranged to
separate audio signals of inputs from said combined audio signal by filtering said combined signal with filters substantially similar to the conference bridge filters.

22. A terminal according to claim 21, **characterized in that** the terminal is arranged to
create a spatial effect of conference call participants on the basis of said filtered signals.

23. A terminal according to claim 21 or 22, **characterized in that**
said filters are substantially complementary comb filters.

24. A terminal according to any one of claims 21 to 23, **characterized in that**
the terminal comprises two filters that are substantially different from each other for filtering the audio signals of said inputs.

25. A terminal according to any one of claims 21 to 24, **characterized in that**
the terminal comprises stereo or multi-channel reproduction means for reproducing separated audio signals.

26. A terminal according to any one of claims 21 to 25, **characterized in that**
the terminal comprises a spatialization unit or a stereo expansion unit for creating a spatial effect of the conference call participants on the basis of said combined audio signal.

27. A computer program for controlling a conference call in a conference bridge, the program comprising a program code for detecting substantially simultaneously active predetermined audio components, such as speech signals, in the audio signals of the inputs of said conference bridge, **characterized in that** the computer program further comprises
a program code for controlling filtering in such a manner that said audio signals of the inputs are filtered with substantially different filters to form separable signals, when there is more than one simultaneously active predetermined audio component,
a program code for combining the filtered, separable audio signals into one signal, and
a program code for transmitting said combined signal to at least one terminal.

28. A computer program for receiving a combined audio signal transmitted from a conference bridge in a terminal, **characterized in that** the computer program comprises
a program code for controlling reception of said combined signal in the terminal,
a program code for separating the audio signals of inputs from said combined signal by filtering said combined signal with filters substantially similar to the conference bridge filters.

29. A computer program according to claim 28, **characterized in that** the computer program further comprises
a program code for creating a spatial effect of conference call participants on the basis of said filtered signals.

30. An audio signal to be transmitted from a conference bridge, **characterized in that**
the audio signal comprises at least two separable audio signal components which have been filtered with substantially different filters to create a substantially distinguishable difference in said audio signal components and which have been added up.
